# EUROPÄISCHE PATENTSCHRIFT

(11) **EP 3 321 069 B1**
(45) Veröffentlichungstag und Bekanntmachung des Hinweises auf die Patenterteilung: **27.03.2019**
(21) Anmeldenummer: 17175021.9
(22) Anmeldetag: 08.06.2017
(51) Int. Cl.: B29C 64/259, B29C 64/245, B29C 64/227, B33Y 30/00, B22F 3/105

(54) **VORRICHTUNG ZUR ADDITIVEN HERSTELLUNG DREIDIMENSIONALER OBJEKTE**
APPARATUS FOR ADDITIVE MANUFACTURING OF THREE-DIMENSIONAL OBJECTS
DISPOSITIF DE FABRICATION ADDITIVE D'OBJETS TRIDIMENSIONNELS

(30) Priorität: 11.11.2016 DE 102016121648
(43) Veröffentlichungstag der Anmeldung: 16.05.2018
(73) Patentinhaber: CL Schutzrechtsverwaltungs GmbH, 96215 Lichtenfels (DE)
(72) Erfinder: Stammberger, Jens, 96472 Rödental (DE); ZEULNER, Fabian, 96215 Lichtenfels (DE); Schödel, Frank, 96317 Kronach (DE); Hofmann, Alexander, 96260 Weismain (DE)
(74) Vertreter: Hafner & Kohl

(56) Entgegenhaltungen:
- EP-A2- 1 704 989
- US-B1- 6 554 600

## Beschreibung

Die Erfindung betrifft eine Vorrichtung zur additiven Herstellung dreidimensionaler Objekte durch sukzessives schichtweises selektives Belichten und damit einhergehendes Verfestigen von Baumaterialschichten aus einem vermittels eines von einer Energiestrahlerzeugungseinrichtung erzeugten Energiestrahls verfestigbaren Baumaterial gemäß Anspruch 1.

Entsprechende Vorrichtungen sind zur additiven Herstellung dreidimensionaler Objekte an und für sich bekannt. Typische Ausführungsformen entsprechender Vorrichtungen sind Vorrichtungen zur Durchführung selektiver Lasersinter- bzw. selektiver Laserschmelzverfahren.
Bekannte Vorrichtungen zur additiven Herstellung dreidimensionaler Objekte umfassen eine Rahmenkonstruktion mit wenigstens einem Aufnahmebereich zur Aufnahme eines einen Pulveraufnahmeraum umfassenden Pulvermoduls, d. h. z. B. eines Baumoduls, in welchem die eigentliche additive Herstellung dreidimensionaler Objekte erfolgt. Entsprechende Pulvermodule umfassen ein den Pulveraufnahmeraum bodenseitig begrenzendes, höhenverstellbar gelagertes Tragelement. Weiterhin umfassen entsprechende Vorrichtungen eine Verstelleinrichtung, welche zur Höhenverstellung des Tragelements eines in den Aufnahmebereich bewegten Pulvermoduls eingerichtet ist. Die Verstelleinrichtung umfasst wenigstens eine höhenverstellbares Verstellelementbaugruppe, welche in einer Betriebsposition zur Höhenverstellung des Tragelements des Pulvermoduls eingerichtet ist.
Im Zusammenhang mit der Realisierung von Bewegungen des in einer entsprechenden Aufnahmeeinrichtung aufgenommenen Pulvermoduls zwischen einer Nichtbetriebsposition, in welcher das Pulvermodul mit einem bestimmten Abstand zu einer eine Prozesskammer der Vorrichtung begrenzenden Wandung der bzw. einer vorrichtungsseitigen Rahmenkonstruktion angeordnet ist bzw. das (in eine obere Position bewegte) pulvermodulseitige Tragelement nicht in einer Baufeldebene der Vorrichtung, in welcher die selektive Belichtung bzw. Verfestigung jeweiliger Baumaterialschichten erfolgt, anordenbar bzw. angeordnet ist, und einer Betriebsposition, in welcher das Pulvermodul nicht mit einem bestimmten Abstand zu der eine Prozesskammer der Vorrichtung begrenzenden Wandung der bzw. einer vorrichtungsseitigen Rahmenkonstruktion angeordnet ist bzw. das (in eine obere Position bewegte) pulvermodulseitige Tragelement in der Baufeldebene anordenbar bzw. angeordnet ist, besteht ein Bedarf nach einer funktionell hochintegrierten, gleichwohl kompakt aufgebauten Hubeinrichtung.

Der Erfindung liegt die Aufgabe zugrunde, eine Vorrichtung mit einer funktionell hochintegrierten, gleichwohl kompakt aufgebauten Hubeinrichtung, welche zur Realisierung von Bewegungen des in einer entsprechenden Aufnahmeeinrichtung aufgenommenen Pulvermoduls zwischen einer entsprechenden Nichtbetriebsposition und einer entsprechenden Betriebsposition eingerichtet ist, anzugeben.

Die Aufgabe wird durch eine Vorrichtung gemäß Anspruch 1 gelöst. Die hierzu abhängigen Ansprüche betreffen mögliche Ausführungsformen der Vorrichtung.

Die hierin beschriebene Vorrichtung ("Vorrichtung") ist zur additiven Herstellung dreidimensionaler Objekte, d. h. beispielsweise technischer Bauteile bzw. technischer Bauteilgruppen, durch sukzessives schichtweises selektives Belichten und damit einhergehendes Verfestigen von Baumaterialschichten aus einem vermittels eines Energiestrahls, d. h. insbesondere eines Laserstrahls, verfestigbaren Baumaterial eingerichtet. Bei dem Baumaterial kann es sich insbesondere um ein partikuläres bzw. pulverförmiges Metall-, Kunststoff- und/oder Keramikmaterial handeln. Die selektive Verfestigung jeweiliger selektiv zu verfestigender Baumaterialschichten erfolgt auf Grundlage objektbezogener Baudaten. Entsprechende Baudaten beschreiben die geometrisch-konstruktive Gestalt des jeweils additiv herzustellenden Objekts und können beispielsweise "geslicte" CAD-Daten eines jeweiligen additiv herzustellenden Objekts beinhalten. Die Vorrichtung kann als SLM-Vorrichtung, d. h. als Vorrichtung zur Durchführung selektiver Laserschmelzverfahren (SLM-Verfahren), oder als SLS-Vorrichtung, d. h. als Vorrichtung zur Durchführung selektiver Lasersinterverfahren (SLS-Verfahren), ausgebildet sein.

Die Vorrichtung umfasst eine Rahmenkonstruktion mit wenigstens einem, z. B. schachtartigen, Aufnahmebereich zur Aufnahme eines Pulvermoduls. Ein entsprechendes Pulvermodul umfasst einen Pulveraufnahmeraum. Bei einem Pulvermodul kann es sich z. B. um ein Baumodul, in dessen Pulveraufnahmeraum (Bauraum) die eigentliche additive Herstellung dreidimensionaler Objekte erfolgt, um ein Dosiermodul, welches zur Dosierung von vermittels einer vorrichtungsseitigen Beschichtereinrichtung in selektiv zu belichtenden bzw. zu verfestigenden Baumaterialschichten in einer Bauebene aufbringbaren Baumaterial aus dem Pulveraufnahmeraum eingerichtet ist, oder um ein Überlaufmodul, welches zur Aufnahme von nicht verfestigtem Baumaterial in dem Pulveraufnahmeraum eingerichtet ist, handeln. Entsprechende Pulvermodule umfassen ein den Pulveraufnahmeraum bodenseitig begrenzendes, höhenverstellbar gelagertes, z. B. plattenartiges bzw. -förmiges, Tragelement. Das Tragelement ist relativ zu den den Pulveraufnahmeraum begrenzenden Wandungen des Pulvermoduls höhenverstellbar gelagert, sodass der Pulveraufnahmeraum durch Bewegungen des Tragelements relativ zu den Pulveraufnahmeraum begrenzenden Wandungen veränderbar ist.

Wie im Weiteren näher beschrieben wird, ist ein in dem Aufnahmebereich angeordnetes Pulvermodul zwischen einer Nichtbetriebsposition, in welcher das Pulvermodul mit einem bestimmten Abstand zu einer eine Prozesskammer der Vorrichtung begrenzenden Wandung der vorrichtungsseitigen Rahmenkonstruktion angeordnet ist bzw. das (in eine obere Position bewegte) pulvermodulseitige Tragelement nicht in einer Baufeldebene der Vorrichtung, in welcher die selektive Belichtung bzw. Verfestigung jeweiliger Baumaterialschichten erfolgt, anordenbar bzw. angeordnet ist, und einer Betriebsposition, in welcher das Pulvermodul nicht mit einem bestimmten Abstand zu der eine Prozesskammer der Vorrichtung begrenzenden Wandung der bzw. einer vorrichtungsseitigen Rahmenkonstruktion angeordnet ist bzw. das (in eine obere Position bewegte) pulvermodulseitige Tragelement in der Baufeldebene anordenbar bzw. angeordnet ist, bewegbar gelagert. Wie sich im Weiteren ergibt, entspricht die Betriebsposition des Pulvermoduls typischerweise einer oberen Position des Pulvermoduls und die Nichtbetriebsposition des Pulvermoduls typischerweise einer unteren Position des Pulvermoduls.

Die Vorrichtung umfasst weiterhin eine Verstelleinrichtung, welche zur Höhenverstellung des Tragelements eines in den Aufnahmebereich bewegten Pulvermoduls eingerichtet ist. Die Verstelleinrichtung umfasst einen, z. B. (elektro)motorischen, Verstellantrieb und eine Verstellelementbaugruppe, deren Bestandteile im Weiteren näher erläutert werden.

Ein erster Bestandteil der Verstellelementbaugruppe ist ein über den Verstellantrieb höhenverstellbares Verstellelement, welches in einer Betriebsposition zur Höhenverstellung des Tragelements des Pulvermoduls eingerichtet ist. Bei dem Verstellelement kann es sich um eine über den Verstellantrieb zu einer entsprechenden Höhenverstellung antreibbare (längliche) Verstellspindel handeln. Die Betriebsposition des Verstellelements ist dadurch definiert, dass das Verstellelement unmittelbar an dem Tragelement anliegt bzw. nur ein geringer Abstand, d. h. typischerweise ein Abstand von wenigen Millimetern, insbesondere von weniger als 5 mm, zwischen dem Verstellelement und dem Tragelement besteht. Entsprechend ist eine Nichtbetriebsposition des Verstellelements dadurch definiert, dass das Verstellelement nicht unmittelbar an dem Tragelement anliegt bzw. ein im Vergleich größerer Abstand, d. h. typischerweise ein Abstand von einigen Millimetern, insbesondere von mehr als 5 mm, zwischen dem Verstellelement und dem Tragelement besteht. Wie sich im Weiteren ergibt, entspricht die Betriebsposition des Verstellelements typischerweise einer oberen Position des Verstellelements und die Nichtbetriebsposition des Verstellelements typischerweise einer unteren Position des Verstellelements.

Ein weiterer Bestandteil der Verstellementbaugruppe ist ein im Bereich des einem modulseitigen Tragelement zugewandten freien Endes des Verstellelements angeordneter oder ausgebildeter, z. B. plattenartiger bzw. - förmiger, Verstellelementtisch. Der Verstellelementtisch kann in der Betriebsposition des Verstellelements eine flächige Anlage an dem Tragelement ermöglichen. Sofern es sich bei dem Verstellelement um eine Verstellspindel handelt, handelt es sich bei dem Verstellelementtisch um einen Verstellspindeltisch.

Ein weiterer Bestandteil der Verstellelementbaugruppe kann ein, z. B. plattenartiges bzw. -förmiges, Trägerelement sein. Das Trägerelement ist mit einer von dem Verstellelement durchsetzbaren bzw. durchsetzten Öffnung, z. B. in Form einer Bohrung, gegebenenfalls einer Gewindebohrung, versehen. Das Verstellelement kann sonach relativ zu dem (unbewegten) Trägerelement höhenverstellt werden. Umgekehrt bedingen Höhenverstellungen des Trägerelements Höhenverstellungen des Verstellelements.

Die Vorrichtung umfasst weiterhin eine Hubeinrichtung, welche wenigstens eine Hubanordnung umfasst. Eine entsprechende Hubanordnung umfasst zwei Hubelemente. Ein erstes Hubelement ist zur Erzeugung eines das Pulvermodul von der Nichtbetriebsposition (des Pulvermoduls) in die Betriebsposition (des Pulvermoduls), und umgekehrt, bewegenden ersten Teilhubs eingerichtet. Das erste Hubelement ist hierfür typischerweise mit dem Pulvermodul koppelbar bzw. gekoppelt. Ein zweites Hubelement ist zur Erzeugung eines die Verstellelementbaugruppe von der Nichtbetriebsposition (der Verstellelementbaugruppe bzw. des Verstellelements) in die Betriebsposition (der Verstellelementbaugruppe bzw. des Verstellelements) bewegenden zweiten Teilhubs eingerichtet. ist Das zweite Hubelement ist hierfür typischerweise mit der Verstellelementbaugruppe koppelbar bzw. gekoppelt. Die beiden Teilhübe können sich zu einem mit der Hubeinrichtung bzw. einer jeweiligen Hubanordnung realisierbaren Gesamthub addieren.

Das erste Hubelement einer Hubanordnung ist über ein Kraftübertragungselement, z. B. in Form einer Kette, eines Riemens oder dergleichen, mit dem zweiten Hubelement der Hubanordnung bewegungsgekoppelt, sodass der über das erste Hubelement erzeugbare oder erzeugte erste Teilhub und der über das zweite Hubelement erzeugbare oder erzeugte zweite Teilhub synchron erfolgt respektive die Erzeugung des über das erste Hubelement erzeugbaren bzw. erzeugten ersten Teilhubs und die Erzeugung des über das zweite Hubelement erzeugbaren bzw. erzeugten zweiten Teilhubs synchron erfolgt. Die synchrone Ausführung des ersten und des zweiten Teilhubs resultiert in einer kombinierten Bewegung des Pulvermoduls und der Verstellelementbaugruppe; mithin werden Bewegungen des Pulvermoduls in dessen Betriebsposition und Bewegungen der Verstellelementbaugruppe in deren Betriebsposition kombiniert ausgeführt. Bewegungen des Pulvermoduls in dessen Betriebsposition (insbesondere ausgehend von dessen Nichtbetriebsposition) und Bewegungen der Verstellelementbaugruppe in deren Betriebsposition (insbesondere ausgehend von deren Nichtbetriebsposition), und umgekehrt, erfolgen sonach gekoppelt. Die Kombination bzw. Kopplung der Bewegungen des Pulvermoduls und der Verstellelementbaugruppe ermöglichen es, den Aufbau einer jeweiligen Hubeinrichtung äußerst kompakt zu halten.

Die Hubeinrichtung bzw. die dieser zugehörige wenigstens eine Hubanordnung ist sonach zur Erzeugung von synchronen bzw. kombinierten Hubbewegungen eines Pulvermoduls und der Verstellelementbaugruppe bzw. des Verstellelements der Verstellelementbaugruppe eingerichtet. Die Vorrichtung umfasst damit eine funktionell hochintegrierte, gleichwohl kompakt aufgebaute Hubeinrichtung.

Die Vorrichtung umfasst im Übrigen die zur Durchführung additiver Bauvorgänge typischerweise erforderlichen Funktionskomponenten, d. h. insbesondere eine Energie- bzw. Laserstrahlerzeugungseinrichtung, welche zur Erzeugung eines Energie- bzw. Laserstrahls zur sukzessiven schichtweisen selektiven Verfestigung jeweiliger Baumaterialschichten eingerichtet ist, und eine Beschichtereinrichtung, welche zur Ausbildung selektiv zu verfestigender Baumaterialschichten in einer Bauebene der Vorrichtung eingerichtet ist. Vermittels der Vorrichtung durchgeführte additive Bauvorgänge erfolgen in einer der Vorrichtung zugehörigen, typischerweise inertisierbaren bzw. inertisierten, Prozesskammer. Die Prozesskammer kann einen Teil der Rahmenkonstruktion der Vorrichtung bilden.

Der über das erste Hubelement erzeugbare bzw. erzeugte erste Teilhub ist typischerweise kleiner als der über das zweite Hubelement erzeugbare bzw. erzeugte zweite Teilhub. Dies trägt dem Umstand Rechnung, dass das zweite Hubelement typischerweise sowohl die Bewegungen bzw. Hubbewegungen der Verstellelementbaugruppe von deren Nichtbetriebsposition in deren Betriebsposition als auch Bewegungen bzw. Hubbewegungen des Pulvermoduls von dessen Nichtbetriebsposition in dessen Betriebsposition absolviert, wohingegen das erste Hubelement nur die Bewegungen bzw. Hubbewegungen des Pulvermoduls von dessen Nichtbetriebsposition in dessen Betriebsposition absolviert. Der über das erste Hubelement erzeugbare erste Teilhub kann z. B. in einem Bereich zwischen 40 und 60 mm liegen, der über das zweite Hubelement erzeugbare zweite Teilhub kann z. B. in einem Bereich zwischen 60 und 90 mm liegen.

Das erste Hubelement kann zwischen zwei Endstellungen bewegbar gelagert sein, wobei eine erste Endstellung des ersten Hubelements der Betriebsposition des Pulvermoduls zugeordnet und eine zweite Endstellung des ersten Hubelements der Nichtbetriebsposition des Pulvermoduls zugeordnet ist. Wie sich im Weiteren ergibt, kann es sich bei jeweiligen Endstellungen des ersten Hubelements insbesondere um Drehstellungen des ersten Hubelements handeln. Unter einer Zuordnung jeweiliger Endstellungen des ersten Hubelements zu der Betriebs- bzw. Nichtbetriebsposition des Pulvermoduls ist zu verstehen, dass das Pulvermodul in seine Betriebsposition bewegt ist, wenn das erste Hubelement in die erste Endstellung bewegt ist, und das Pulvermodul in seine Nichtbetriebsposition bewegt ist, wenn das erste Hubelement in die zweite Endstellung bewegt ist.

In analoger Weise kann das zweite Hubelement zwischen zwei Endstellungen bewegbar gelagert sein, wobei eine erste Endstellung des zweiten Hubelements der Betriebsposition der Verstellelementbaugruppe zugeordnet ist und eine zweite Endstellung des zweiten Hubelements der Nichtbetriebsposition der Verstellelementbaugruppe zugeordnet ist. Wie sich im Weiteren ergibt, kann es sich bei jeweiligen Endstellungen des zweiten Hubelements insbesondere um Drehstellungen des zweiten Hubelements handeln. Unter einer Zuordnung jeweiliger Endstellungen des zweiten Hubelements zu der Betriebs- bzw. Nichtbetriebsposition der Verstellelementbaugruppe ist zu verstehen, dass die Verstellelementbaugruppe in ihre Betriebsposition bewegt ist, wenn das zweite Hubelement in die erste Endstellung bewegt ist, und die Verstellelementbaugruppe in ihre Nichtbetriebsposition bewegt ist, wenn das zweite Hubelement in die zweite Endstellung bewegt ist.

Das erste Hubelement kann als, insbesondere scheibenartiges bzw. -förmiges, d. h. als Kurvenscheibe ausgebildetes, um eine Drehachse zentrisch oder exzentrisch drehbar gelagertes Steuerelement mit einer eine, insbesondere kurvenartige bzw. -förmige, Bewegungsbahn bestimmter Länge definierenden Steuerfläche, z. B. in Form einer Ausnehmung bzw. Nut in dem ersten Hubelement, ausgebildet sein oder ein solches umfassen. Die Endstellungen des ersten Hubelements können durch die jeweiligen Enden der Bewegungsbahn definiert sein. Denkbar ist es jedoch auch, die Endstellungen des ersten Hubelements durch Kolbenendposition eines Antriebs- oder Hubkolbens einer Hubantriebseinrichtung oder durch Endstellungen definierende Anschlagelemente zu definieren. Der Außenumfang des ersten Hubelements kann mit Kraftübertragungselementen, z. B. in Form von Zähnen, ausgebildet sein, welche eine Kraftübertragung, d. h. insbesondere eine Momentübertragung, von dem Kraftübertragungselement auf das erste Hubelement ermöglichen.

In analoger Weise kann das zweite Hubelement als, insbesondere scheibenartiges bzw. -förmiges, d. h. als Kurvenscheibe ausgebildetes, um eine Drehachse zentrisch oder exzentrisch drehbar gelagertes Steuerelement mit einer eine, insbesondere kurvenartige bzw. -förmige, Bewegungsbahn bestimmter Länge definierenden Steuerfläche, z. B. in Form einer Ausnehmung bzw. Nut in dem zweiten Hubelement, ausgebildet sein oder ein solches umfassen. Die Endstellungen des zweiten Hubelements können hierbei durch die jeweiligen Enden der Bewegungsbahn definiert sein. Denkbar ist es jedoch auch, die Endstellungen des zweiten Hubelements durch Kolbenendposition eines Antriebs- oder Hubkolbens einer Hubantriebseinrichtung oder durch Endstellungen definierende Anschlagelemente zu definieren. Der Außenumfang des zweiten Hubelements kann mit Kraftübertragungselementen, z. B. in Form von Zähnen, ausgebildet sein, welche eine Kraftübertragung, d. h. insbesondere eine Momentübertragung, von dem Kraftübertragungselement auf das zweite Hubelement ermöglichen.

Wie erwähnt, ist der über das erste Hubelement erzeugbare bzw. erzeugte erste Teilhub typischerweise kleiner als der über das zweite Hubelement erzeugbare bzw. erzeugte zweite Teilhub. Dies spiegelt sich in der Länge der Bewegungsbahnen der Steuerflächen der jeweiligen Steuerelemente wider; die Länge der Bewegungsbahn der Steuerfläche des Steuerelements des ersten Hubelements ist deshalb typischerweise geringer als Länge der Bewegungsbahn der Steuerfläche des Steuerelements des zweiten Hubelements.

Das Steuerelement des ersten Hubelements kann über ein entlang der Steuerfläche bzw. in der Steuerfläche (bei Ausführung der Steuerfläche als Ausnehmung bzw. Nut in dem ersten Hubelement) bewegbar gelagertes Stellelement mit dem Pulvermodul, insbesondere (beschädigungs- bzw. zerstörungsfrei) lösbar, koppelbar bzw. gekoppelt sein. Das Stellelement des ersten Hubelements kann wenigstens ein erstes Kopplungselement zur Kopplung des Stellelements mit der Steuerfläche und wenigstens ein zweites Kopplungselement zur Kopplung des Stellelements mit dem Pulvermodul. Bei dem ersten Kopplungselement kann es sich beispielsweise um ein Eingriffselement zum Eingriff in eine als kurvenartig verlaufende Ausnehmung bzw. Nut ausgebildete Steuerfläche handeln. Bei dem zweiten Kopplungselement kann es sich beispielsweise um ein Eingriffselement zum Eingriff in eine an dem Pulvermodul ausgebildete Ausnehmung handeln. Jeweilige Eingriffselemente können als Gleit- oder Rollenelemente ausgebildet sein bzw. solche umfassen.

In analoger Weise kann das Steuerelement des zweiten Hubelements über ein entlang der Steuerfläche bzw. in der Steuerfläche (bei Ausführung der Steuerfläche als Ausnehmung bzw. Nut in dem zweiten Hubelement) bewegbar gelagertes Stellelement mit der Verstellelementbaugruppe, d. h. insbesondere einem einen Bestandteil der Verstellelementbaugruppe bildenden Trägerelement, gegebenenfalls (beschädigungs- bzw. zerstörungsfrei) lösbar, koppelbar oder gekoppelt sein. Das Stellelement des zweiten Hubelements kann wenigstens ein erstes Kopplungselement zur Kopplung des Stellelements mit der Steuerfläche und wenigstens ein zweites Kopplungselement zur Kopplung des Stellelements mit der Verstellelementbaugruppe umfassen. Bei dem ersten Kopplungselement kann es sich insbesondere um ein Eingriffselement zum Eingriff in eine als kurvenartig verlaufende Ausnehmung bzw. Nut ausgebildete Steuerfläche handeln. Bei dem zweiten Kopplungselement kann es sich insbesondere um ein Auflageelement zur Auflage eines Bestandteils der Verstellelementbaugruppe, insbesondere des Trägerelements, oder um ein Eingriffselement zum Eingriff in eine an der Verstellelementbaugruppe, insbesondere an einem entsprechenden Trägerelement, ausgebildete Ausnehmung handeln. Jeweilige Eingriffselemente können als Gleit- oder Rollenelemente ausgebildet sein bzw. solche umfassen.

Zur Erzeugung einer die jeweiligen Teilhübe realisierenden Hubkraft kann die Vorrichtung eine der wenigstens einen Hubanordnung zugeordnete Hubantriebseinrichtung umfassen. Die, insbesondere pneumatisch oder hydraulisch wirkend ausgebildete, Hubantriebseinrichtung ist zur Erzeugung einer die jeweiligen Teilhübe realisierenden Hubkraft eingerichtet ist, wobei ein der Hubantriebseinrichtung zugehöriges Hubantriebselement mit dem Kraftübertragungselement der Hubanordnung gekoppelt ist. Mithin kann die Kraftübertragung zwischen der Hubantriebseinrichtung und der Hubeinrichtung unmittelbar über das die jeweiligen Hubelemente einer Hubanordnung koppelnde Kraftübertragungsmittel erfolgen.

Im Hinblick auf die vermittels der Hubeinrichtung zu bewegenden Lasten kann es zweckmäßig sein, wenn die Hubeinrichtung mehrere Hubanordnungen umfasst. Die die Hubeinrichtung bildenden Hubanordnungen können paarweise angeordnet sein. Beispielsweise kann ein erstes Paar seitlich benachbart, mithin nebeneinander angeordneter Hubanordnungen an einem die Aufnahmeeinrichtung seitlich begrenzenden ersten Rahmenkonstruktionselement, gegebenenfalls einer ersten Wandung der Rahmenkonstruktion der Vorrichtung, angeordnet oder ausgebildet sein und ein zweites Paar seitlich benachbart, mithin nebeneinander angeordneter Hubanordnungen an einem die Aufnahmeeinrichtung seitlich begrenzenden zweiten Rahmenkonstruktionselement, gegebenenfalls einer zweiten Wandung der Rahmenkonstruktion der Vorrichtung, angeordnet oder ausgebildet sein. Das die Aufnahmeeinrichtung seitlich begrenzende erste Rahmenkonstruktionselement ist dem die Aufnahmeeinrichtung seitlich begrenzenden zweiten Rahmenkonstruktionselement gegenüber liegend angeordnet, sodass auch die Paare seitlich benachbart angeordneter Hubanordnungen einander gegenüber liegend angeordnet sind.
Um die Anzahl der Komponenten der Hubeinrichtung möglichst gering und den Aufbau der Hubeinrichtung möglichst kompakt zu halten, kann dem ersten Paar seitlich benachbart angeordneter Hubanordnungen eine erste gemeinsame Hubantriebseinrichtung zugeordnet sein. Das der Hubantriebseinrichtung zugehörige Hubantriebselement ist sowohl mit dem mit dem Kraftübertragungselement der ersten Hubanordnung als auch mit dem Kraftübertragungselement der zweiten Hubanordnung des ersten Paars gekoppelt. In analoger Weise kann dem zweiten Paar seitlich benachbart angeordneter Hubanordnungen eine zweite gemeinsame Hubantriebseinrichtung zugeordnet sein. Das der Hubantriebseinrichtung zugehörige Hubantriebselement ist sowohl mit dem mit dem Kraftübertragungselement der ersten Hubanordnung als auch mit dem Kraftübertragungselement der zweiten Hubanordnung des zweiten Paars gekoppelt.
Um bei einer entsprechenden paarweisen und gegenüber liegenden Anordnung von Hubanordnungen eine synchrone Bewegung sicherzustellen, können einander gegenüber liegende zweite Hubelemente des ersten und des zweiten Paars seitlich benachbart angeordneter Hubanordnungen über ein dieses verbindendes, insbesondere stangenartiges bzw. -förmiges, Kopplungselement, z. B. in Form einer Kraftübertragungsstange, bewegungsgekoppelt sein.

Die Offenbarung ist anhand von Ausführungsbeispielen in den Zeichnungsfiguren näher erläutert. Dabei zeigen:
- Fig. 1: eine Prinzipdarstellung einer Vorrichtung gemäß einem Ausführungsbeispiel
- Fig. 2, 3: je eine vergrößerte Ansicht der in Fig. 1 gezeigten Einzelheit II, III;
- Fig. 4, 5: je eine Prinzipdarstellung einer Hubeinrichtung gemäß einem Ausführungsbeispiel.

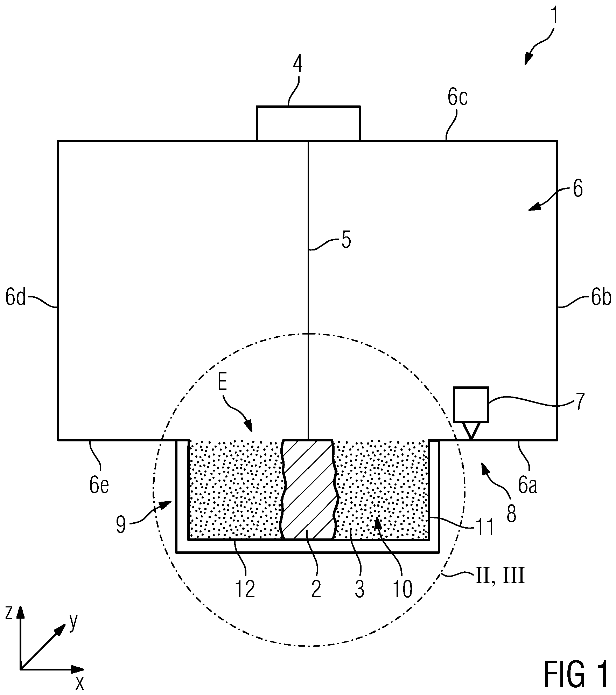

Fig. 1 zeigt eine Prinzipdarstellung einer Vorrichtung 1 gemäß einem Ausführungsbeispiel. Ersichtlich ist in Fig. 1 nur der für die Erläuterung des nachfolgend beschriebenen Prinzips relevante Ausschnitt der Vorrichtung 1 gezeigt.

Die Vorrichtung 1 ist zur additiven Herstellung dreidimensionaler Objekte 2, d. h. insbesondere technischer Bauteile bzw. technischer Bauteilgruppen, durch sukzessives schichtweises selektives Belichten und damit einhergehendes Verfestigen von Baumaterialschichten aus einem verfestigbaren Baumaterial 3, d. h. z. B. eines Metallpulvers, vermittels eines von einer Laserstrahlerzeugungseinrichtung 4 erzeugten Laserstrahls 5 eingerichtet. Die Belichtung und die damit einhergehende selektive Verfestigung jeweiliger zu verfestigender Baumaterialschichten erfolgt auf Grundlage von objektbezogenen Baudaten. Entsprechende Baudaten beschreiben die geometrische bzw. geometrisch-konstruktive Gestalt des jeweils additiv herzustellenden Objekts 2. Entsprechende Baudaten können beispielsweise "geslicte" CAD-Daten des herzustellenden Objekts 2 beinhalten.

Die Vorrichtung 1 umfasst inertisierbare Prozesskammer 6 umfassen. Die Prozesskammer 6 ist durch Wandungselemente 6a - 6e definiert. In der Prozesskammer 6 kann wenigstens ein Teil der zur Durchführung additiver Bauvorgänge erforderlichen Funktionskomponenten, d. h. insbesondere eine in horizontaler Richtung bewegbar gelagerte Beschichtereinrichtung 7, welche zur Ausbildung zu verfestigender Baumaterialschichten in einer Bauebene eingerichtet ist, angeordnet bzw. ausgebildet sein. Die Prozesskammer 6 kann einen Teil einer Rahmenkonstruktion 8 der Vorrichtung 1 bilden.

Die Rahmenkonstruktion 8 umfasst wenigstens einen, z. B. schachtartigen, Aufnahmebereich 9 zur Aufnahme eines einen Pulveraufnahmeraum 10 umfassenden Pulvermoduls 11. Ersichtlich ist der Aufnahmebereich 9 im Bereich der den Boden der Prozesskammer 6 bildenden Wandungen 6a, 6e angeordnet bzw. ausgebildet. Der Aufnahmebereich 9 befindet sich unterhalb der Prozesskammer 6. Bei dem in den Fig. 1 - 3 gezeigten Ausführungsbeispiel handelt es sich bei dem Pulvermodul 11 um ein Baumodul, in dessen Pulveraufnahmeraum 11 (Bauraum) die eigentliche additive Herstellung dreidimensionaler Objekte 2 erfolgt. Prinzipiell wäre es jedoch auch denkbar, dass es sich bei dem Pulvermodul 11 um ein Dosiermodul, welches zur Dosierung von vermittels der Beschichtereinrichtung 7 in selektiv zu belichtenden bzw. zu verfestigenden Baumaterialschichten in der Bauebene aufbringbaren Baumaterial 3 aus dem Pulveraufnahmeraum 10 eingerichtet ist, oder um ein Überlaufmodul, welches zur Aufnahme von nicht verfestigtem Baumaterial 3 in dem Pulveraufnahmeraum 10 eingerichtet ist, handeln. Unabhängig von ihrer konkreten Ausführung umfassen die Pulvermodule 11 typischerweise ein den Pulveraufnahmeraum 10 bodenseitig begrenzendes, höhenverstellbar gelagertes, plattenartiges bzw. -förmiges Tragelement 12. Das Tragelement 12 ist relativ zu den den Pulveraufnahmeraum 10 begrenzenden Wandungen (nicht näher bezeichnet) des Pulvermoduls 11 höhenverstellbar gelagert, sodass der Pulveraufnahmeraum 10 durch Bewegungen des Tragelements 12 relativ zu den den Pulveraufnahmeraum 10 begrenzenden Wandungen veränderbar ist.

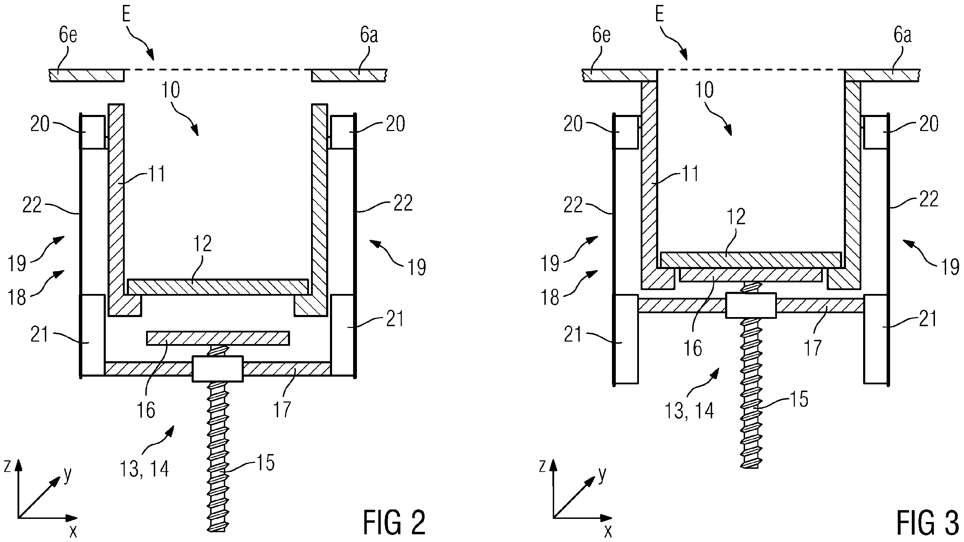

Die Fig. 2, 3 zeigen je eine vergrößerte Ansicht der in Fig. 1 gezeigten Einzelheit II, III.

Ein in dem Aufnahmebereich 9 angeordnetes Pulvermodul 11 ist zwischen einer in Fig. 2 gezeigten Nichtbetriebsposition, in welcher das Pulvermodul 11 mit einem bestimmten (vertikalen) Abstand zu einer die Prozesskammer 6 begrenzenden Wandung, vorliegend die Wandungen 6a 6e, der vorrichtungsseitigen Rahmenkonstruktion 8 angeordnet ist bzw. das (in eine obere Position bewegte) pulvermodulseitige Tragelement 12 nicht in einer Baufeldebene E der Vorrichtung 1, in welcher die selektive Belichtung bzw. Verfestigung jeweiliger Baumaterialschichten erfolgt, anordenbar bzw. angeordnet ist, und einer in Fig. 3 gezeigten Betriebsposition, in welcher das Pulvermodul 11 nicht mit einem bestimmten Abstand zu der die Prozesskammer 6 begrenzenden Wandung, vorliegend der Wandungen 6a, 6e, der vorrichtungsseitigen Rahmenkonstruktion 8 angeordnet ist bzw. das (in eine obere Position bewegte) pulvermodulseitige Tragelement 12 in der Baufeldebene E anordenbar bzw. angeordnet ist, bewegbar gelagert.

Anhand der Fig. 2, 3 ist ersichtlich, dass die Betriebsposition des Pulvermoduls 11 einer oberen Position des Pulvermoduls 11 und die Nichtbetriebsposition des Pulvermoduls 11 einer unteren Position des Pulvermoduls 11 entspricht.

Anhand der Fig. 2, 3 ist weiter ersichtlich, dass die Vorrichtung 1 eine Verstelleinrichtung 13 umfasst, welche zur Höhenverstellung des Tragelements 12 eines in den Aufnahmebereich 9 bewegten Pulvermoduls 11 eingerichtet ist. Die Verstelleinrichtung 13 umfasst einen, z. B. (elektro)motorischen, Verstellantrieb (nicht gezeigt) und eine Verstellelementbaugruppe 14, deren Bestandteile im Weiteren näher erläutert werden.

Ein erster Bestandteil der Verstellelementbaugruppe 14 ist ein über den Verstellantrieb höhenverstellbares Verstellelement 15, welches in einer Betriebsposition zur Höhenverstellung des Tragelements 12 des Pulvermoduls 11 eingerichtet ist. Bei dem Verstellelement 15 handelt es sich um eine über den Verstellantrieb zu einer entsprechenden Höhenverstellung antreibbare (längliche) Verstellspindel. Die in Fig. 3 gezeigte Betriebsposition des Verstellelements 15 ist dadurch definiert, dass das Verstellelement 15 unmittelbar an dem Tragelement 12 anliegt bzw. nur ein geringer Abstand, d. h. typischerweise ein Abstand von wenigen Millimetern, insbesondere von weniger als 5 mm, zwischen dem Verstellelement 15 (bzw. dessen Oberseite) und dem Tragelement 12 (bzw. dessen Unterseite) besteht. Entsprechend ist eine in Fig. 2 gezeigte Nichtbetriebsposition des Verstellelements 15 dadurch definiert, dass das Verstellelement 15 nicht unmittelbar an dem Tragelement 12 anliegt bzw. ein im Vergleich größerer Abstand, d. h. typischerweise ein Abstand von einigen Millimetern, insbesondere von mehr als 5 mm, zwischen dem Verstellelement 15 und dem Tragelement 12 besteht.

Anhand der Fig. 2, 3 ist ersichtlich, dass die Betriebsposition des Verstellelements 15 einer oberen Position des Verstellelements 15 und die Nichtbetriebsposition des Verstellelements 15 einer unteren Position des Verstellelements 15 entspricht.

Ein weiterer Bestandteil der Verstellelementbaugruppe 14 ist ein im Bereich des dem Tragelement 12 zugewandten freien Endes des Verstellelements 15 angeordneter bzw. ausgebildeter plattenartiger bzw. -förmiger Verstellelementtisch 16 (Verstellspindeltisch). Der Verstellelementtisch 16 kann in der Betriebsposition des Verstellelements 15 eine flächige Anlage an dem Tragelement 12 ermöglichen. Der Verstellelementtisch 16 kann in der Betriebsposition des Verstellelements 15 zumindest abschnittsweise in das Pulvermodul 11 bewegt sein, welches hierfür mit einer entsprechenden Ausnehmung versehen ist.

Ein weiterer Bestandteil der Verstellelementbaugruppe 14 ist ein plattenartiges bzw. -förmiges Trägerelement 17 sein. Das Trägerelement 17 ist mit einer von dem Verstellelement 15 durchsetzten Öffnung (nicht gezeigt), z. B. in Form einer Bohrung, gegebenenfalls einer Gewindebohrung, versehen. Das Verstellelement 15 kann relativ zu dem (unbewegten) Trägerelement 17 höhenverstellt werden. Umgekehrt bedingen Höhenverstellungen des Trägerelements 17 Höhenverstellungen des Verstellelements 15.

Die Vorrichtung 1 umfasst weiterhin eine Hubeinrichtung 18, welche mehrere Hubanordnungen 19 umfasst. Eine entsprechende Hubanordnung 19 umfasst zwei Hubelemente 20, 21. Ein jeweiliges erstes Hubelement 20 ist zur Erzeugung eines das in dem Aufnahmebereich 9 befindlichen Pulvermodul 11 von dessen Nichtbetriebsposition in dessen Betriebsposition, und umgekehrt, bewegenden ersten Teilhubs eingerichtet. Das erste Hubelement 20 ist hierfür mit dem Pulvermodul 11 koppelbar bzw. gekoppelt. Ein jeweiliges zweites Hubelement 21 ist zur Erzeugung eines die Verstellelementbaugruppe 14 von deren Nichtbetriebsposition in deren Betriebsposition bzw. eines das Verstellelement 15 von dessen Nichtbetriebsposition bzw. in dessen Betriebsposition bewegenden zweiten Teilhubs eingerichtet. Das zweite Hubelement 21 ist hierfür mit der Verstellelementbaugruppe 14, d. h. vorliegend dem Trägerelement 17, koppelbar bzw. gekoppelt. Die beiden Teilhübe können sich zu einem mit der Hubeinrichtung 18 bzw. einer jeweiligen Hubanordnung 19 realisierbaren Gesamthub addieren.

Das erste Hubelement 20 einer jeweiligen Hubanordnung 19 ist über ein Kraftübertragungselement 22, z. B. in Form einer Kette, eines Riemens oder dergleichen, mit dem zweiten Hubelement 21 der Hubanordnung 19 bewegungsgekoppelt, sodass der über das erste Hubelement 20 erzeugbare bzw. erzeugte erste Teilhub und der über das zweite Hubelement 21 erzeugbare bzw. erzeugte zweite Teilhub synchron erfolgt respektive die Erzeugung des über das erste Hubelement 20 erzeugbaren bzw. erzeugten ersten Teilhubs und die Erzeugung des über das zweite Hubelement 21 erzeugbaren bzw. erzeugten zweiten Teilhubs synchron erfolgt. Die synchrone Ausführung des ersten und des zweiten Teilhubs resultiert in einer kombinierten (vertikalen) Bewegung des Pulvermoduls 11 und der Verstellelementbaugruppe 14; mithin werden Bewegungen des Pulvermoduls 11 in dessen Betriebsposition und Bewegungen der Verstellelementbaugruppe 14 in deren Betriebsposition bzw. Bewegungen des Verstellelements 15 in dessen Betriebsposition kombiniert ausgeführt. Entsprechende Bewegungen des Pulvermoduls 11 und der Verstellelementbaugruppe 14 bzw. des Verstellelements 15 erfolgen sonach gekoppelt.

Der über ein jeweiliges erstes Hubelement 20 erzeugbare bzw. erzeugte erste Teilhub ist kleiner als der über ein jeweiliges zweites Hubelement 21 erzeugbare bzw. erzeugte zweite Teilhub. Dies trägt dem Umstand Rechnung, dass das zweite Hubelement 21 sowohl die Bewegungen bzw. Hubbewegungen der Verstellelementbaugruppe 14 als auch Bewegungen bzw. Hubbewegungen des Pulvermoduls 11 absolviert, wohingegen das erste Hubelement 20 nur die Bewegungen bzw. Hubbewegungen des Pulvermoduls 11 absolviert. Der über das erste Hubelement 20 erzeugbare erste Teilhub kann z. B. in einem Bereich zwischen 40 und 60 mm liegen, der über das zweite Hubelement 21 erzeugbare zweite Teilhub kann z. B. in einem Bereich zwischen 60 und 90 mm liegen.

Ein jeweiliges erstes Hubelement 20 ist zwischen zwei Endstellungen, wie sich im Weiteren ergibt, handelt es sich bei den Endstellungen des ersten Hubelements 20 um Drehstellungen, bewegbar gelagert, wobei eine erste Endstellung des ersten Hubelements 20 der Betriebsposition des Pulvermoduls 11 zugeordnet und eine zweite Endstellung des ersten Hubelements 20 der Nichtbetriebsposition des Pulvermoduls 11 zugeordnet ist. Unter einer Zuordnung jeweiliger Endstellungen des ersten Hubelements 20 zu der Betriebs- bzw. Nichtbetriebsposition des Pulvermoduls 11 ist zu verstehen, dass das Pulvermodul 11 in die Betriebsposition bewegt ist, wenn das erste Hubelement 20 in die erste Endstellung bewegt ist, und das Pulvermodul 11 in die Nichtbetriebsposition bewegt ist, wenn das erste Hubelement 20 in die zweite Endstellung bewegt ist.

In analoger Weise ist ein jeweiliges zweites Hubelement 21 zwischen zwei Endstellungen, wie sich im Weiteren ergibt, handelt es sich auch bei den Endstellungen des zweiten Hubelements 21 um Drehstellungen, bewegbar gelagert, wobei eine erste Endstellung des zweiten Hubelements 21 der Betriebsposition der Verstellelementbaugruppe 14 bzw. des Verstellelements 15 zugeordnet ist und eine zweite Endstellung des zweiten Hubelements 21 der Nichtbetriebsposition der Verstellelementbaugruppe 14 bzw. des Verstellelements 15 zugeordnet ist. Unter einer Zuordnung jeweiliger Endstellungen des zweiten Hubelements 21 zu der Betriebs- bzw. Nichtbetriebsposition der Verstellelementbaugruppe 14 bzw. des Verstellelements 15 ist zu verstehen, dass die Verstellelementbaugruppe 14 bzw. das Verstellelement 15 in die Betriebsposition bewegt ist, wenn das zweite Hubelement 21 in die erste Endstellung bewegt ist, und die Verstellelementbaugruppe 14 bzw. das Verstellelement 15 in die Nichtbetriebsposition bewegt ist, wenn das zweite Hubelement 21 in die zweite Endstellung bewegt ist.

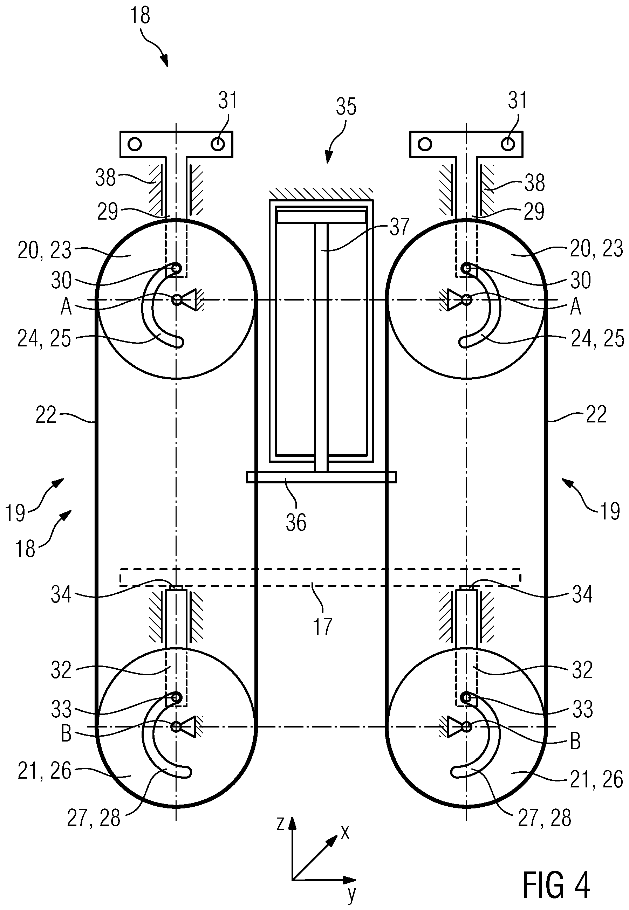

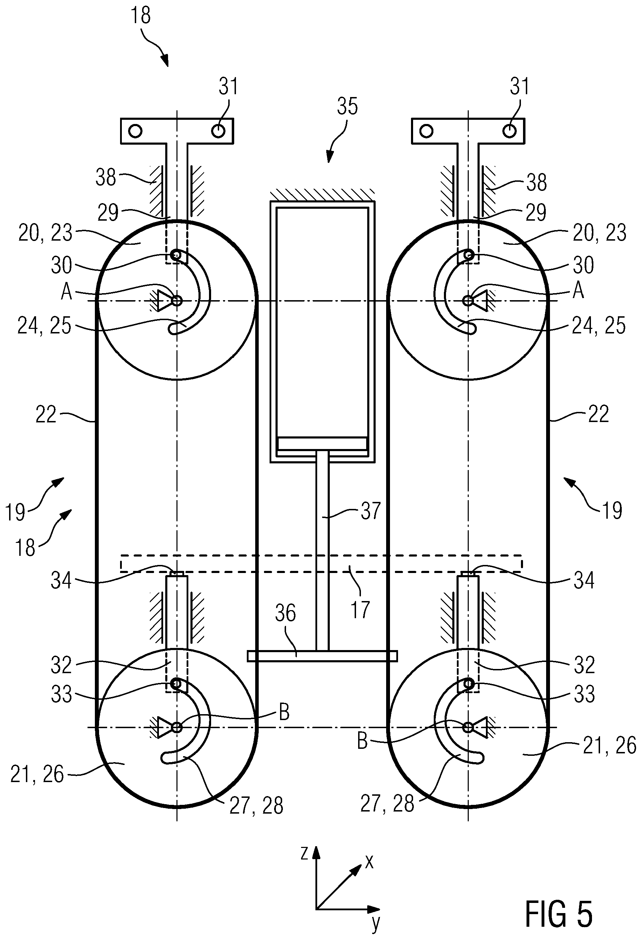

Die Fig. 4, 5 zeigen je eine Prinzipdarstellung eines Teils der Hubeinrichtung 18 gemäß einem Ausführungsbeispiel. Der Teil der Hubeinrichtung 19 ist in den Fig. 4, 5 in einer im Vergleich zu der in den Fig. 2, 3 gegebenen Ansicht um 90° gedrehten Ansicht dargestellt. Ein Pulvermodul 11 ist aus Gründen der Übersichtlichkeit nicht dargestellt.

In Fig. 4 sind die ersten Hubelemente 20 in die zweite Endstellung bewegt, sodass das Pulvermodul 11 in die Nichtbetriebsposition (untere Position) bewegt ist. Gleichermaßen sind die zweiten Hubelemente 21 in zweite Endstellung bewegt, sodass die Verstellelementbaugruppe 14 bzw. das Verstellelement 15 in die Nichtbetriebsposition (untere Position) bewegt ist. In Fig. 5 sind die ersten Hubelemente 20 in die erste Endstellung bewegt, sodass das Pulvermodul 11 in die Betriebsposition (obere Position) bewegt ist. Gleichermaßen sind die zweiten Hubelemente 21 in erste Endstellung bewegt, sodass die Verstellelementbaugruppe 14 bzw. das Verstellelement 15 in die Betriebsposition (obere Position) bewegt ist.

Anhand der Fig. 4, 5 ist ersichtlich, dass ein jeweiliges erstes Hubelement 20 als scheibenartiges bzw. -förmiges, d. h. als Kurvenscheibe ausgebildetes, um eine Drehachse A drehbar gelagertes Steuerelement 23 mit einer eine kurvenartige bzw. -förmige Bewegungsbahn 24 bestimmter Länge definierenden Steuerfläche 25 in Form einer Ausnehmung bzw. Nut ausgebildet sein kann. Die Endstellungen des ersten Hubelements 20 sind durch die jeweiligen Enden der Bewegungsbahn 24 definiert und entsprechen sonach den jeweiligen Drehstellungen des ersten Hubelements 20 in den Enden der Bewegungsbahn 24. Der Außenumfang des ersten Hubelements 20 kann mit Kraftübertragungselementen (nicht gezeigt), z. B. in Form von Zähnen, ausgebildet sein, welche eine Kraftübertragung, d. h. insbesondere eine Momentübertragung, von dem Kraftübertragungselement 22 auf das erste Hubelement 20 ermöglichen.

In analoger Weise kann ein jeweiliges zweites Hubelement 21 als scheibenartiges bzw. -förmiges d. h. als Kurvenscheibe ausgebildetes, um eine Drehachse B drehbar gelagertes Steuerelement 26 mit einer eine kurvenartige bzw. -förmige Bewegungsbahn 27 bestimmter Länge definierenden Steuerfläche 28 in Form einer Ausnehmung bzw. Nut ausgebildet sein. Die Endstellungen des zweiten Hubelements 21 sind durch die jeweiligen Enden der Bewegungsbahn 27 definiert und entsprechen sonach den jeweiligen Drehstellungen des zweiten Hubelements 20 in den Enden der Bewegungsbahn 27. Auch der Außenumfang des zweiten Hubelements 21 kann mit Kraftübertragungselementen (nicht gezeigt), z. B. in Form von Zähnen, ausgebildet sein, welche eine Kraftübertragung, d. h. insbesondere eine Momentübertragung, von dem Kraftübertragungselement 22 auf das zweite Hubelement 21 ermöglichen.

Wie erwähnt, ist der über ein jeweiliges erstes Hubelement 20 erzeugbare bzw. erzeugte erste Teilhub kleiner als der über ein jeweiliges zweites Hubelement 21 erzeugbare bzw. erzeugte zweite Teilhub. Dies spiegelt sich in der Länge der Bewegungsbahnen 24, 27 der Steuerflächen 25, 28 der jeweiligen Steuerelemente 23, 26 wider; die Länge der Bewegungsbahn 24 der Steuerfläche 25 des Steuerelements 23 des ersten Hubelements 20 ist deshalb geringer als Länge der Bewegungsbahn 27 der Steuerfläche 28 des Steuerelements 26 des zweiten Hubelements 21.

Anhand der Fig. 4, 5 ist ersichtlich, dass das Steuerelement 23 eines jeweiligen ersten Hubelements 20 über ein entlang der Steuerfläche 25 bzw. in der Steuerfläche 25 bewegbar gelagertes Stellelement 29 - hier beispielhaft als T-förmiger Träger ausgebildet - mit dem Pulvermodul 11, insbesondere (beschädigungs- bzw. zerstörungsfrei) lösbar, koppelbar ist. Das Stellelement 29 umfasst ein erstes Kopplungselement 30 zur Kopplung des Stellelements 29 mit der Steuerfläche 25 und wenigstens ein zweites Kopplungselement 31 zur Kopplung des Stellelements 29 mit dem Pulvermodul 11. Bei dem ersten Kopplungselement 30 handelt es sich um ein Eingriffselement zum Eingriff in die, wie erwähnt, als kurvenartig verlaufende Ausnehmung bzw. Nut ausgebildete Steuerfläche 25. Bei einem zweiten Kopplungselement 31 handelt es sich um ein Eingriffselement zum Eingriff in eine an dem Pulvermodul 11 ausgebildete Ausnehmung (nicht gezeigt). Jeweilige Eingriffselemente können als Gleit- oder Rollenelemente ausgebildet sein bzw. solche umfassen.

In analoger Weise kann das Steuerelement 26 eines jeweiligen zweiten Hubelements 21 über ein entlang der Steuerfläche 28 bzw. in der Steuerfläche 28 bewegbar gelagertes Stellelement 32 - hier beispielhaft als I-förmiger Träger ausgebildet - mit der Verstellelementbaugruppe 14, d. h. dem Trägerelement 17, gegebenenfalls (beschädigungs- bzw. zerstörungsfrei) lösbar, gekoppelt ist. Das Stellelement 32 des zweiten Hubelements 21 umfasst ein erstes Kopplungselement 33 zur Kopplung des Stellelements 32 mit der Steuerfläche 28 und ein (optionales) zweites Kopplungselement 34 zur Kopplung des Stellelements 32 mit der Verstellelementbaugruppe 14 bzw. dem Trägerelement 17. Bei dem ersten Kopplungselement 33 handelt es sich um ein Eingriffselement zum Eingriff in die, wie erwähnt, als kurvenartig verlaufende Ausnehmung bzw. Nut ausgebildete Steuerfläche 28. Bei dem (optionalen) zweiten Kopplungselement 34 kann es sich insbesondere um ein Auflageelement zur Auflage des Trägerelements 17 oder um ein Eingriffselement zum Eingriff in eine an der Verstellelementbaugruppe 14, insbesondere an dem Trägerelement 17, ausgebildete Ausnehmung handeln. Jeweilige Eingriffselemente können wiederum als Gleit- oder Rollenelemente ausgebildet sein bzw. solche umfassen.

Die Vorrichtung 1 umfasst eine mehreren Hubanordnungen 19 zugeordnete Hubantriebseinrichtung 35. Die, insbesondere pneumatisch oder hydraulisch wirkend ausgebildete, Hubantriebseinrichtung 35 ist zur Erzeugung einer die jeweiligen Teilhübe realisierenden Hubkraft eingerichtet. Ersichtlich ist ein der Hubantriebseinrichtung 35 zugehöriges, mit einem Antriebs- oder Hubkolben 37 der Hubantriebseinrichtung 35 gekoppeltes Hubantriebselement 36 mit den Kraftübertragungselementen 22 der Hubanordnungen 19 gekoppelt. Mithin erfolgt die Kraftübertragung zwischen der Hubantriebseinrichtung 35 und der Hubeinrichtung 18 bzw. den Hubanordnungen 19 unmittelbar über das die Hubelemente 20, 21 einer jeweiligen Hubanordnung 19 koppelnde Kraftübertragungsmittel 22.

Wie in den Fig. 4, 5 gezeigt und bereits erwähnt, umfasst die Hubeinrichtung 18 mehrere Hubanordnungen 19. Die die Hubeinrichtung 18 bildenden Hubanordnungen 19 sind paarweise angeordnet. Beispielsweise kann ein erstes Paar seitlich benachbart, mithin nebeneinander angeordneter Hubanordnungen 19 an einem die Aufnahmeeinrichtung 9 seitlich begrenzenden ersten Rahmenkonstruktionselement 38, gegebenenfalls einer ersten Wandung der Rahmenkonstruktion 8, angeordnet oder ausgebildet sein (vgl. Fig. 4, 5). Ein zweites Paar seitlich benachbart, mithin nebeneinander angeordneter Hubanordnungen 19 ist an einem die Aufnahmeeinrichtung 8 seitlich begrenzenden zweiten Rahmenkonstruktionselement, gegebenenfalls einer zweiten Wandung der Rahmenkonstruktion, angeordnet oder ausgebildet. Das die Aufnahmeeinrichtung 9 seitlich begrenzende erste Rahmenkonstruktionselement 38 ist dem die Aufnahmeeinrichtung 9 seitlich begrenzenden zweiten Rahmenkonstruktionselement gegenüber liegend angeordnet, sodass auch die Paare seitlich benachbart angeordneter Hubanordnungen 19 einander gegenüber liegend angeordnet sind.

Dem in den Fig. 4, 5 gezeigten Paar seitlich benachbart angeordneter Hubanordnungen 19 ist die Hubantriebseinrichtung 35 gemeinsam zugeordnet. Das der Hubantriebseinrichtung 35 zugehörige Hubantriebselement 36 ist, wie erwähnt, mit den Kraftübertragungselementen 22 der jeweiligen Hubanordnungen 19 gekoppelt. In analoger Weise ist einem einem gegenüber liegend angeordneten zweiten Paar seitlich benachbart angeordneter Hubanordnungen 19 eine zweite gemeinsame Hubantriebseinrichtung (nicht gezeigt) zugeordnet. Das der Hubantriebseinrichtung zugehörige Hubantriebselement ist sowohl mit den Kraftübertragungselementen 22 der jeweiligen Hubanordnungen 19 gekoppelt.

Insgesamt liegt eine redundante bzw. symmetrische Ausbildung der Hubeinrichtung 18 bzw. eine redundante bzw. symmetrische Anordnung jeweiliger Hubanordnungen 19 vor.

Wenngleich in den Fig. nicht gezeigt, ist es denkbar, dass, um bei einer entsprechenden paarweisen und gegenüber liegenden Anordnung von Hubanordnungen 19 eine synchrone Bewegung sicherzustellen, können einander gegenüber liegende zweite Hubelemente 21 über ein dieses verbindendes, insbesondere stangenartiges bzw. -förmiges, Kopplungselement (nicht gezeigt), z. B. in Form einer Kraftübertragungsstange, bewegungsgekoppelt sein.

## Patentansprüche

1. Vorrichtung (1) zur additiven Herstellung dreidimensionaler Objekte (2) durch sukzessives schichtweises selektives Belichten und damit einhergehendes Verfestigen von Baumaterialschichten aus einem vermittels eines von einer Energiestrahlerzeugungseinrichtung (4) erzeugten Energiestrahls (5) verfestigbaren Baumaterial (3), umfassend:
- eine Rahmenkonstruktion (8) mit wenigstens einem Aufnahmebereich (9) zur Aufnahme eines einen Pulveraufnahmeraum (10) umfassenden Pulvermoduls (11), wobei das Pulvermodul (11) ein den Pulveraufnahmeraum (10) bodenseitig begrenzendes, höhenverstellbar gelagertes Tragelement (12) umfasst,
- eine Verstelleinrichtung (13), welche zur Höhenverstellung des Tragelements (12) eines in den Aufnahmebereich (9) bewegten Pulvermoduls (11) eingerichtet ist, wobei die Verstelleinrichtung (13) wenigstens eine höhenverstellbare Verstellelementbaugruppe (14) umfasst, welche in einer Betriebsposition zur Höhenverstellung des Tragelements (12) des Pulvermoduls (11) eingerichtet ist,
**gekennzeichnet durch** eine Hubeinrichtung (18), wobei die Hubeinrichtung (18) wenigstens eine Hubanordnung (19) umfasst, wobei die Hubanordnung (19) ein erstes Hubelement (20), welches zur Erzeugung eines das Pulvermodul (11) von einer Nichtbetriebsposition in eine Betriebsposition bewegenden ersten Teilhubs eingerichtet ist, und ein zweites Hubelement (21), welches zur Erzeugung eines die Verstellelementbaugruppe (14) von einer Nichtbetriebsposition in eine Betriebsposition bewegenden zweiten Teilhubs eingerichtet ist, wobei das erste Hubelement (20) über ein Kraftübertragungselement (22) mit dem zweiten Hubelement (21) bewegungsgekoppelt ist, sodass der über das erste Hubelement (20) erzeugbare oder erzeugte erste Teilhub und der über das zweite Hubelement (21) erzeugbare oder erzeugte zweite Teilhub synchron erfolgt.

2. Vorrichtung nach Anspruch 1, **dadurch gekennzeichnet, dass** der über das erste Hubelement (20) erzeugbare oder erzeugte erste Teilhub kleiner als der über das zweite Hubelement (21) erzeugbare oder erzeugte zweite Teilhub ist.

3. Vorrichtung nach Anspruch 1 oder 2, **dadurch gekennzeichnet, dass** das erste Hubelement (20) mit dem Pulvermodul (11) koppelbar oder gekoppelt ist und das zweite Hubelement (21) mit der Verstellelementbaugruppe (14) koppelbar oder gekoppelt ist.

4. Vorrichtung nach einem der vorhergehenden Ansprüche, **dadurch gekennzeichnet, dass** das erste Hubelement (20) zwischen zwei Endstellungen bewegbar gelagert ist, wobei eine erste Endstellung des ersten Hubelements (20) der Betriebsposition des Pulvermoduls (11) zugeordnet ist und eine zweite Endstellung des ersten Hubelements (20) der Nichtbetriebsposition des Pulvermoduls (11) zugeordnet ist, und
das zweite Hubelement (21) zwischen zwei Endstellungen bewegbar gelagert ist, wobei eine erste Endstellung des zweiten Hubelements (21) der Betriebsposition der Verstellelementbaugruppe (14) zugeordnet ist und eine zweite Endstellung des zweiten Hubelements (21) der Nichtbetriebsposition der Verstellelementbaugruppe (14) zugeordnet ist.

5. Vorrichtung nach Anspruch 4, **dadurch gekennzeichnet, dass** das erste Hubelement (20) als, insbesondere scheibenförmiges, um eine Drehachse (A) drehbar gelagertes Steuerelement (23) mit einer eine, insbesondere kurvenartige, Bewegungsbahn (24) bestimmter Länge definierenden Steuerfläche (25) ausgebildet ist oder ein solches umfasst, wobei die Endstellungen des ersten Hubelements (20) durch die jeweiligen Enden der Bewegungsbahn (24) definiert sind, und
das zweite Hubelement (21) als, insbesondere scheibenförmiges, um eine Drehachse (B) drehbar gelagertes Steuerelement (26) mit einer eine, insbesondere kurvenartige, Bewegungsbahn (27) bestimmter Länge definierenden Steuerfläche (28) ausgebildet ist oder ein solches umfasst, wobei die Endstellungen des zweiten Hubelements (21) durch die jeweiligen Enden der Bewegungsbahn (27) definiert sind.

6. Vorrichtung nach Anspruch 5, **dadurch gekennzeichnet, dass** das Steuerelement (23) des ersten Hubelements (20) über ein entlang der Steuerfläche (24) bewegbar gelagertes Stellelement (29) mit dem Pulvermodul (11) koppelbar oder gekoppelt ist und das Steuerelement (26) des zweiten Hubelements (21) über ein entlang der Steuerfläche (27) bewegbar gelagertes Stellelement (32) mit der Verstellelementbaugruppe (14) koppelbar oder gekoppelt ist.

7. Vorrichtung nach einem der vorhergehende Ansprüche, **gekennzeichnet durch** eine der wenigstens einen Hubanordnung (19) zugeordnete Hubantriebseinrichtung (35), welche zur Erzeugung einer die jeweiligen Teilhübe realisierenden Hubkraft eingerichtet ist, wobei ein der Hubantriebseinrichtung (35) zugehöriges Hubantriebselement (36) mit dem Kraftübertragungselement (22) gekoppelt ist.

8. Vorrichtung nach einem der vorhergehenden Ansprüche, **dadurch gekennzeichnet, dass** die Hubeinrichtung (18) mehrere Hubanordnungen (19) umfasst, wobei ein erstes Paar seitlich benachbart angeordneter Hubanordnungen (19) an einem die Aufnahmeeinrichtung (9) seitlich begrenzenden ersten Rahmenkonstruktionselement (38), insbesondere einer ersten Wandung der Rahmenkonstruktion (8), angeordnet oder ausgebildet ist und ein zweites Paar seitlich benachbart angeordneter Hubanordnungen (19) an einem die Aufnahmeeinrichtung (9) seitlich begrenzenden zweiten Rahmenkonstruktionselement, insbesondere einer zweiten Wandung der Rahmenkonstruktion (8), angeordnet oder ausgebildet ist, wobei das erste Rahmenkonstruktionselement (38) dem zweiten Rahmenkonstruktionselement gegenüber liegend angeordnet ist.

9. Vorrichtung nach Anspruch 7 und 8, **dadurch gekennzeichnet, dass** dem ersten Paar seitlich benachbart angeordneter Hubanordnungen (19) eine gemeinsame Hubantriebseinrichtung (35) zugeordnet ist, wobei das der Hubantriebseinrichtung (35) zugehörige Hubantriebselement (36) sowohl mit dem mit dem Kraftübertragungselement (22) der ersten Hubanordnung (19) als auch mit dem Kraftübertragungselement (22) der zweiten Hubanordnung (19) des ersten Paars gekoppelt ist, und dem zweiten Paar seitlich benachbart angeordneter Hubanordnungen (19) eine gemeinsame Hubantriebseinrichtung (35) zugeordnet ist, wobei das der Hubantriebseinrichtung (35) zugehörige Hubantriebselement (36) sowohl mit dem mit dem Kraftübertragungselement (22) der ersten Hubanordnung (19) als auch mit dem Kraftübertragungselement der zweiten Hubanordnung (19) des zweiten Paars gekoppelt ist.

10. Vorrichtung nach Anspruch 8 oder 9, **dadurch gekennzeichnet, dass** einander gegenüber liegende zweite Hubelemente (21) des ersten und des zweiten Paars seitlich benachbart angeordneter Hubanordnungen (19) über ein dieses verbindendes, insbesondere stangenförmiges, Kopplungselement, bewegungsgekoppelt sind.

## Claims

1. Device (1) for additive production of three-dimensional objects (2) through successive layered selective illumination and accompanying solidification of construction material layers of a construction material (3), solidifiable by means of an energy beam (5) generated by an energy-beam generating means (4), including:
- a frame construction (8) with at least one receiving region (9) for receiving a powder module (11) including a powder-receiving space (10), wherein the powder module (11) includes a support element (12), mounted height-adjustably and delimiting the powder-receiving space (10) at the floor side,
- an adjusting unit means (13), which is configured for height adjustment of the support element (12) of a powder module (11) moved into the receiving region (9), wherein the adjusting means (13) includes at least one height-adjustable adjusting element assembly (14), which is configured, in an operating position, for height-adjustment of the support element (12) of the powder module (11),
**characterized by** a lifting means (18), wherein the lifting means (18) includes at least one lifting arrangement (19), wherein the lifting arrangement (19) includes a first lifting element (20), which is configured to generate a first partial lift moving the powder module (11) from a non-operating position into an operating position, and a second lifting element (21), which is configured to generate a second partial lift moving the adjusting element assembly (14) from a non-operating position into an operating position, wherein the first lifting element (20) is motion-coupled, via a force-transmitting element (22), with the second lifting element (21), so that the first partial lift generated or generatable via the first lifting element (20) and the second partial lift generated or generatable via the second lifting element (21) occur synchronously.

2. Device according to claim 1, **characterized in that** the first partial lift generated or generatable via the first lifting element (20) is smaller than the second partial lift generated or generatable via the second lifting element (21).

3. Device according to claim 1 or 2, **characterized in that** the first lifting element (20) is coupled or couplable with the powder module (11), and the second lifting element (21) is coupled or couplable with the adjusting element assembly (14).

4. Device according to one of the preceding claims, **characterized in that** the first lifting element (20) is movably mounted between two final positions, wherein a first final position of the first lifting element (20) is assigned to the operating position of the powder module (11), and a second final position of the first lifting element (20) is assigned to the non-operating position of the powder module (11), and
the second lifting element (21) is movably mounted between two final positions, wherein a first final position of the second lifting element (21) is assigned to the operating position of the adjusting element assembly (14), and a second final position of the second lifting element (21) is assigned to the non-operating position of the adjusting element assembly (14).

5. Device according to claim 4, **characterized in that** the first lifting element (20) is configured as a control element (23), in particular disc-shaped, rotatably mounted around a rotational axis (A), with a control surface (25) defining a, in particular curve-like, motion path (24) of a defined length, or includes such an element, wherein the final positions of the first lifting element (20) are defined through the respective ends of the motion path (24), and
the second lifting element (21) is configured as a control element (26), in particular disc-shaped, rotatably mounted around a rotational axis (B) with a control surface (28), defining a, in particular curve-like motion path (27) of a defined length, or includes such an element, wherein the final positions of the second lifting element (21) are defined through the respective ends of the motion path (27).

6. Device according to claim 5, **characterized in that** the control element (23) of the first lifting element (20) is coupled or couplable, via an actuating element (29) movably mounted along the control surface (24), with the powder module (11), and the control element (26) of the second lifting element (21) is coupled or couplable, via an actuating element (32) movably mounted along the control surface (27), with the adjusting element assembly (14).

7. Device according to one of the preceding claims, **characterized by** a lifting drive means (35) assigned to the at least one lifting arrangement (19), which unit is configured to generate a lifting force implementing the respective partial liftings, wherein a lift drive element (36) associated with the lifting drive means (35) is coupled with the force transmitting element (22).

8. Device according to one of the preceding claims, **characterized in that** the lifting means (18) includes multiple lifting arrangements (19), wherein a first pair of laterally-adjacently arranged lifting arrangements (19) is arranged or formed on a first frame construction element (38) laterally delimiting the receiving means (9), in particular a first wall of the frame construction (8), and a second pair of laterally-adjacently arranged lifting arrangements (19), is arranged or formed on a second frame construction element laterally delimiting the receiving means (9), in particular a second wall of the frame construction (8), wherein the first frame construction element (38) is arranged opposite to the second frame construction element.

9. Device according to claim 7 or 8, **characterized in that** the first pair of laterally- adjacently arranged lifting arrangements (19) has a common lift drive unit (35) assigned to it, wherein the lift drive element (36) associated with the lift drive unit (35) is coupled with the force transmitting element (22) of the first lifting arrangement (19), as well as also with the force transmitting element (22) of the second lifting arrangement (19) of the first pair, and a common lift drive unit (35) is assigned to the second pair of laterally-adjacently arranged lifting arrangements (19), wherein the lift drive element (36) associated with the lift drive unit (35) is coupled with the force transmitting element (22) of the first lifting arrangement (19), as well as also with the force transmitting element of the second lifting arrangement of the second pair.

10. Device according to claim 8 or 9, **characterized in that** second lifting elements (21), opposite to each other, of the first and the second pair of laterally adjacently arranged lifting arrangements (19) are motion-coupled via a, in particular rod-shaped, coupling element connecting said arrangements.

## Revendications

1. Dispositif (1) de fabrication additive d'objets (2) tridimensionnels par exposition sélective successive couche par couche et par consolidation, allant de pair avec celle-ci, de couches de matériau de construction composées d'un matériau de construction (3) pouvant être consolidé au moyen d'un faisceau d'énergie (5) produit par un appareil de production de faisceaux d'énergie (4), comprenant :
- une structure de cadre (8) avec au moins une zone de logement (9) servant à loger un module de poudre (11) comprenant un espace de logement de poudre (10), dans lequel le module de poudre (11) comprend un élément de support (12) délimitant côté fond l'espace de logement de poudre (10), et monté de manière réglable en hauteur,
- un dispositif de réglage (13), qui est conçu pour régler en hauteur de l'élément de support (12) d'un module de poudre (11) déplacé dans la zone de logement (9), dans lequel le dispositif de réglage (13) comprend au moins un ensemble d'éléments de réglage (14) pouvant être réglés en hauteur, lequel, dans une position de fonctionnement, est conçu pour le réglage en hauteur de l'élément de support (12) du module de poudre (11),
**caractérisé par** un moyen de levage (18), le moyen de levage (18) comprenant au moins un ensemble de levage (19), dans lequel l'ensemble de levage (19) comprend un premier élément de levage (20), qui est conçu pour générer un premier levage partiel déplaçant le module de poudre (11) depuis une position de non-fonctionnement dans une position de fonctionnement, et un deuxième élément de levage (21), qui est conçu pour générer un deuxième levage partiel déplaçant l'ensemble d'éléments de réglage (14) depuis une position de non-fonctionnement dans une position de fonctionnement, le premier élément de levage (20) étant couplé en mouvement par l'intermédiaire d'un élément de transmission de force (22) au deuxième élément de levage (21) de sorte que le premier levage partiel pouvant être produit ou produit par l'intermédiaire du premier élément de levage (20) et le deuxième levage partiel pouvant être produit ou produit par l'intermédiaire du deuxième élément de levage (21) sont effectués de manière synchrone.

2. Dispositif selon la revendication 1, **caractérisé en ce que** le premier levage partiel pouvant être produit ou produit par l'intermédiaire du premier élément de levage (20) est inférieur au deuxième levage partiel pouvant être produit ou produit par l'intermédiaire du deuxième élément de levage (21).

3. Dispositif selon la revendication 1 ou 2, **caractérisé en ce que** le premier élément de levage (20) peut être couplé ou est couplé au module de poudre (11) et le deuxième élément de levage (21) peut être couplé ou est couplé à l'ensemble d'éléments de réglage (14).

4. Dispositif selon l'une quelconque des revendications précédentes, **caractérisé en ce que** le premier élément de levage (20) est monté de manière à pouvoir être déplacé entre deux positions finales, une première position finale du premier élément de levage (20) étant associée à la position de fonctionnement du module de poudre (11) et une deuxième position finale du premier élément de levage (20) étant associée à la position de non-fonctionnement du module de poudre (11), et
le deuxième élément de levage (21) étant monté de manière à pouvoir être déplacé entre deux positions finales, une première position finale du deuxième élément de levage (21) étant associée à la position de fonctionnement de l'ensemble d'éléments de réglage (14) et une deuxième position finale du deuxième élément de levage (21) étant associée à la position de non-fonctionnement de l'ensemble d'éléments de réglage (14).

5. Dispositif selon la revendication 4, **caractérisé en ce que** le premier élément de levage (20) est réalisé sous la forme d'un élément de commande (23), en particulier en forme de disque, monté de manière à pouvoir tourner autour d'un axe de rotation (A) avec une surface de commande (25) définissant une trajectoire de déplacement (24), en particulier de type courbe d'une longueur définie ou comprend un élément de commande de ce type, les positions finales du premier élément de levage (20) étant définies par les extrémités respectives de la trajectoire de déplacement (24), et
le deuxième élément de levage (21) étant réalisé sous la forme d'un élément de commande (26), en particulier en forme de disque, monté de manière à pouvoir tourner autour d'un axe de rotation (B) avec une surface de commande (28) définissant une trajectoire de déplacement (27), en particulier de type de courbe, d'une longueur définie ou comprend un élément de commande de ce type, dans lequel les positions finales du deuxième élément de levage (21) sont définies par les extrémités respectives de la trajectoire de déplacement (27).

6. Dispositif selon la revendication 5, **caractérisé en ce que** l'élément de commande (23) du premier élément de levage (20) peut être couplé ou est couplé par l'intermédiaire d'un élément de réglage (29) monté de manière à pouvoir être déplacé le long de la surface de commande (24) au module de poudre (11), et l'élément de commande (26) du deuxième élément de levage (21) peut être couplé ou est couplé par l'intermédiaire d'un élément de réglage (32) monté de manière à pouvoir être déplacé le long de la surface de commande (27) à l'ensemble d'éléments de réglage (14).

7. Dispositif selon l'une quelconque des revendications précédentes, **caractérisé par** un moyen d'entraînement de levage (35) associé à l'au moins un ensemble de levage (19), lequel est conçu pour produire une force de levage réalisant les levages partiels respectifs, un élément d'entraînement de levage (36) associé au moyen d'entraînement de levage (35) étant couplé à l'élément de transmission de force (22).

8. Dispositif selon l'une quelconque des revendications précédentes, **caractérisé en ce que** le moyen de levage (18) comprend plusieurs ensembles de levage (19), dans lequel une première paire d'ensembles de levage (19) disposés de manière adjacente latéralement est disposée ou réalisée au niveau d'un premier élément de structure de cadre (38) délimitant latéralement le moyen de logement (9), en particulier au niveau d'une première paroi de la structure de cadre (8), et une deuxième paire d'ensembles de levage (19) disposés de manière adjacente latéralement est disposée ou réalisée au niveau d'un deuxième élément de structure de cadre délimitant latéralement le moyen de logement (9), en particulier au niveau d'une deuxième paroi de la structure de cadre (8), le premier élément de structure de cadre (38) étant disposé de manière à faire face au deuxième élément de structure de cadre.

9. Dispositif selon la revendication 7 et 8, **caractérisé en ce qu'**un moyen d'entraînement de levage (35) commun est associé à la première paire d'ensembles de levage (19) disposés de manière adjacente latéralement, dans lequel l'élément d'entraînement de levage (36) associé au moyen d'entraînement de levage (35) est couplé à la fois à l'élément de transmission de force (22) du premier ensemble de levage (19) et à l'élément de transmission de force (22) du deuxième ensemble de levage (19) de la première paire, et un moyen d'entraînement de levage (35) commun est associé à la deuxième paire d'ensembles de levage (19) disposés de manière adjacente latéralement, dans lequel l'élément d'entraînement de levage (36) associé au moyen d'entraînement de levage (35) est couplé à la fois à l'élément de transmission de force (22) du premier ensemble de levage (19) et à l'élément de transmission de force du deuxième ensemble de levage (19) de la deuxième paire.

10. Dispositif selon la revendication 8 ou 9, **caractérisé en ce que** des deuxièmes éléments de levage (21) se faisant face les uns les autres de la première et de la deuxième paire d'ensembles de levage (19) disposés de manière adjacente latéralement sont couplés en mouvement par l'intermédiaire d'un élément de couplage, notamment sous forme de tige, et reliant ces derniers.
